# EUROPEAN PATENT APPLICATION

(11) **EP 3 031 507 A1**
(43) Date of publication of application: **15.06.2016**
(21) Application number: 15460057.1
(22) Date of filing: 31.08.2015
(51) Int. Cl.: B01D 46/00, B01D 46/24

(54) **STATIONARY FILTER BAGS REGENERATION UNIT WITH INDIVIDUAL UNDER-PRESSURE TURN-OFF**

(30) Priority: 08.12.2014 UA 2014013107
(71) Applicant: Svoboda Piotr Slebioda, 76-200 Slupsk (PL)
(72) Inventor: Slebioda, Piotr, 62-002 Suchy Las (PL)
(74) Representative: Luczak, Jerzy

(57) **Abstract**

Horizontal bag filter applies to separators for filtration of solid particles from gases, which use filter bag preferably made of flexible material.

The horizontal bag filter, which consists of a housing divided by a perforated wall on a polluted gas chamber and a cleaned gas chamber. In the polluted gas chamber are installed filter bags. Wherein the horizontal bag filter (7) has a regeneration unit, compressed air tank (8), polluted gas inlet duct, cleaned gas outlet duct. The filter bag (7) regeneration system is made as a "lift" system, mounted on guides on each column of filter bags. The "lift" unit is composed of contactless sensors (9), sliding valves (10) with sensors (11) and openings (12) for the compressed air duct, which moves on the vertical guides (13) and the compressed air ducts (14) are connected one by one to each valve (10) on one end and on other end to the compressed air tank (8) by the mean of electro-valve (15).

## Description

The claimed invention relates to separators isolating particles, which casing is has at least one dirty air (gas) chamber and at least one cleaned air (gas) chamber and which use bag filters made of flexible material. Particularly the separator has a bag filter regeneration unit and can be used in ferrous and nonferrous metallurgy, chemical industry, construction industry and so on.

There are many different systems for cleaning polluted air (gas). Bag filters are used the most frequently to isolate the gas polluting particles. These filters are divided in two ranges: vertical and horizontal. Thus both types of bag filters operate on the same principle - polluted gas is sucked under pressure from the polluted gas chamber trough filter bags (preferably from an elastic material) to the cleaned gas chamber.

Filter bags during the process become covered by particles which slow down and obstruct the gas flow, for this reason such system of air (gas) cleaning has to be completed with filter bags regeneration system.

One of such systems is US 2014/0174476, a known gas cleaning system of micro particles of dust, wood, metal. The mentioned patent consider particularly a filter bags regeneration system. The filtration unit is composed of a housing, a frame, an outlet and an inlet of the treated gas. On the frame are fixed the filter bags, contactless sensors, a shaft connected to the motor, an air tube for bag blowing and a control unit. The tube for blowing air into the filter bags is connected to the shaft and consists of a collecting duct, diaphragm valves, distributing pipes and Venturi pipes. Thus on the air supply tube is installed a Pitot tube.

The unit operates as follow. The polluted gas is introduced into the filtration chamber. It passes the filter bags and to goes out through the outlet.

Tubes for blowing air on filter bags are moving along the housing in which the frame is fixed.

By the Pitot tubes the gas pressure is measured on the outlet of bags and it is a base to evaluate the degree of the filter bags load. This information is fed to the controller, which determines the line of bags should be cleaned.

The control unit gives the information to the motor which is connected to the shaft, which moves the compressed air tube for the regeneration into the right position, measured by the contactless sensors.

Once the position achieved, where the regeneration has to take place, the regeneration air is fed trough an electro-valve to the collecting duct from which one distributing tubes are blowing the air by the Venturi tubes on the filter bags outlets.

However, this method of regeneration has serious flaws - a sophisticated system of defining the filter bag pollution degree (which requires a constant movement of the tube for supplying air to the filter bag blowing elements above the filter bag openings), wasting energy and regenerative air (cleaning concerns all filter bags being on the same line) and reverse charge of pollution particles on the working filter bags.

Also known gas cleaning system US 5529592, which consists of a body divided by a perforated wall on polluted gas chamber and cleaned gas chamber, a screw conveyor for dust removal, a polluted gas inlet and and cleaned gas outlet.

In the polluted gas chamber are installed filter bags mounted horizontally on the perforated wall, and in the cleaned gas chamber, there is a moving chamber with openings for the cleaned gas passage, with valves, divided also in two parts.

The moving chamber is situated in the cleaned gas chamber in the manner that it adjoins snugly to the perforated wall. Also it has such size that two columns of the filter bags are inside its walls.

In the upper part of the moving chamber is mounted at least one nozzle, connected to the compressed air duct, it serves to regenerate the filter bags.

The tube is connected trough an electro-valve on the compressed air tank, which makes a part of the moving chamber.

The unit operates as follows. To the polluted gas chamber through the inlet duct is introduced polluted gas. It passes through the filter bag and passes through the openings in the moving chamber than it goes out by the outlet duct as cleaned gas.

The pressure difference is constantly measured in the polluted gas chamber and in the cleaned gas chamber. When this difference differs from the set value, the moving chamber stops moving, the valves in the moving chamber are closing the holes and the compressed air is fed through the nozzles in order to clean filter bags.

In another embodiment of the filter separator the moving chamber has more nozzles, according to the number of filter bags in one column.

In this embodiment the regeneration blow is more accurate (air aimed and directly sent into each filter bag of the column). However, both embodiments of the device also have disadvantages, primarily related to the process of regeneration of filter bags.

The apparatus of US patent 5529592 as well as in the patent US 2014/0174476 has a complex system of defining the degree of filter bags pollution (it requires a constant movement of the bag filter mobile regeneration unit). An important volume of compressed air is dispensed (as cleaning concerns all filter bags being on the same line) and a reverse pollution of the adjacent filter bags.

As the base of the invention is a task to create a bag filter for cleaning the air or gas with a modified construction of the filter bag regeneration unit so it leads to reduce of amount of the compressed air used in the process, and so it improves the efficiency of the process itself, like to reduces the filter average resistance what makes to reduce the energy necessary to move the suction fan and to reduce the number of the regeneration cycles per filter bag to make the bag's lifetime longer.

The problem is solved in the present invention by the horizontal bag filter, which consists of a housing divided by a perforated wall on a polluted gas chamber and a cleaned gas chamber, in which wall is set at least two rows of filter bags and at least two bags in each one, arranged horizontally according to perforated wall perforation, a bag filter regeneration system, a compressed air tank, a polluted gas inlet duct and cleaned gas outlet duct, a filter bag regeneration unit made as a "lift" system, situated on each column of filter bags, wherein the "lift" unit is composed of contactless sensors, sliding valves with sensors and openings for the compressed air duct, which moves on the vertical guides, compressed air ducts, connected one by one to each sliding valve on one end and on other end to the compressed air tank by the mean of electro-valves.

The invention, in its exemplary but not limiting form, is displayed by the following drawings:

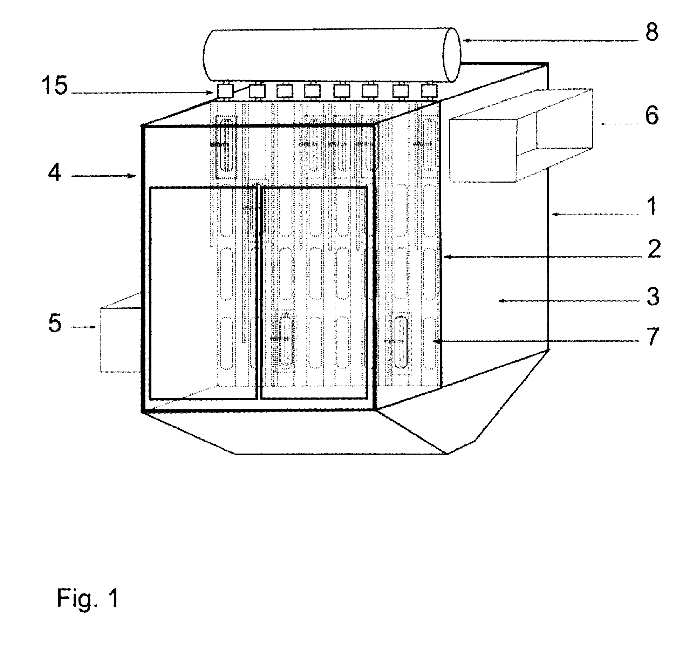

Figure 1 - general view of horizontal bag filter.
Figure 2 - general view of regeneration system from the cleaned gas chamber.

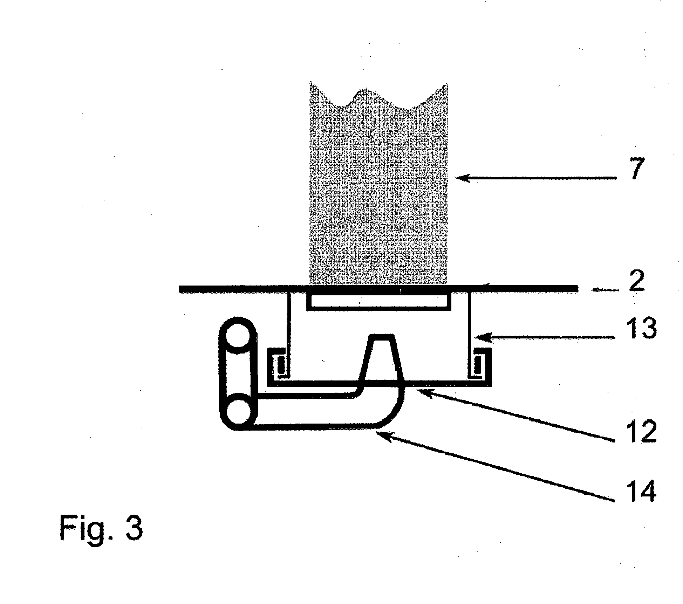

Figure 3 - detailed view of the sliding valve in cross-section perpendicular to the plane of the slide axis.

The horizontal bag filter, as is claimed, consist of the housing 1, the perforated wall 2, which separates the housing 1 on the polluted gas chamber 3 and the cleaned gas chamber 4, the polluted gas inlet duct 5 and the cleaned gas outlet duct 6.

By this in the polluted gas chamber 3 are installed at least two rows of filter bags 7 consisting in at least two bags each, in horizontal position, connected to the perforation in the wall.

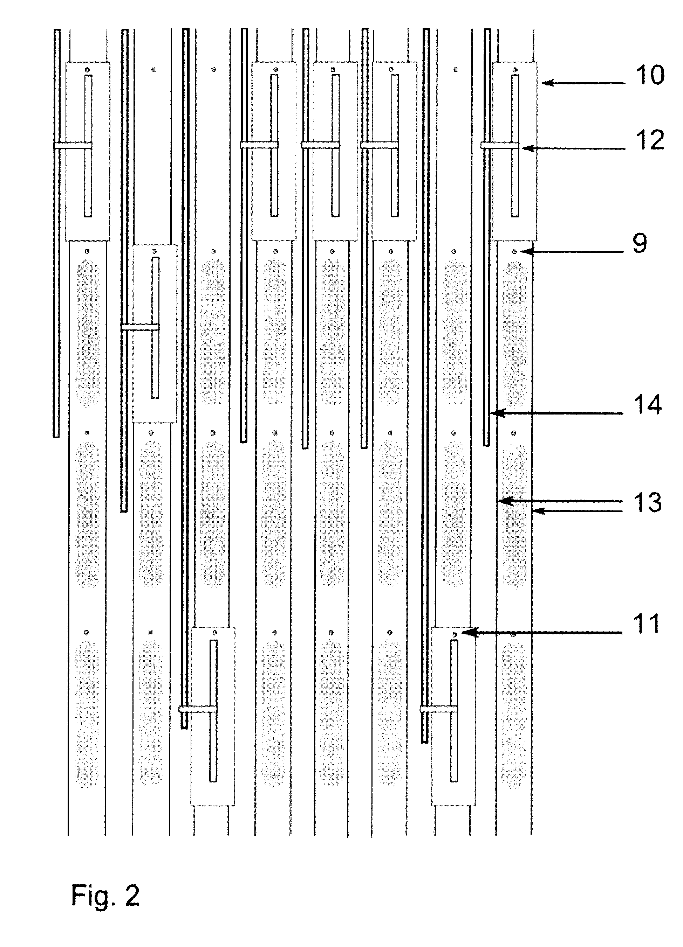

In the cleaned gas chamber 4 is installed the "lift" regeneration unit (see fig.2) connected to the compressed air tank 8 and composed of the contactless sensors 9, the sliding valves 10 with the sensors 11 and the openings 12 for connection of the compressed air duct, which valves are sliding on the vertical guides 13, and the compressed air ducts 14, connected by one end to the sliding valve 10 and by the other end to the compressed air tank 8 by the mean of the electro-valves 15.

Horizontal bag filter, as being claimed, works as follow. By the polluted gas inlet duct 5 the polluted gas is introduced under pressure to the polluted gas chamber 3. During the passage through the filter bags 7, the gas is cleaned up and is introduced to the cleaned gas chamber 4, from which one is evacuated by the cleaned gas outlet 6.

During the cleaning process based on the filter bags 7 the solid particles are separated (as the dust) and those particles are accumulated on the outer surface of the filter bags 7.

It comes a moment when the amount of solid impurities that accumulate on the bag filter bags is critical and the process of cleaning the polluted gas becomes difficult. This is determined by the difference in pressure in the polluted gas chamber 3 and cleaned gas chamber 4 (pressure measure sensors are not shown on the drawings). To follow the right process it is necessary to regenerate the filter bags 7. The "lift" regeneration unit is installed to clean up any of the filer bags 7.

It works as follow. The control unit (installed externally with other control units of the process line) receives the information concerning that the change of the pressure difference in the polluted gas chamber 3 and the cleaned gas chamber 4 is over the designed acceptance level, than the controller gives the order to move the sliding valve 10 on the guides 13 on the position following the chosen program. The sliding valve 10 arrives on front of the filter bag opening on the wall 2 (the position confirmed by the sensors 9 and 11, closes by itself the opening, and proceed to inject the compressed air coming from the compressed air tank 8, directed by the electro-valve 15, which comes through compressed air duct 14 by the opening 12 in the sliding valve 10.

Such realization of the filter regeneration system elements allows improvement of the filtration quality and reduces the amount of compressed air to be use in the process, it reduces the average filter resistance as it just one filter bag is out of filtration during the regeneration process by one time what leads to reduction of the energy needed to move the suction fan. As it enables to target only the most charged filter bags by regeneration process, it reduces also the number of the regeneration cycles per filter bag what leads to the average filter bag's lifetime longer.

## Claims

1. The horizontal bag filter, which consists of a housing divided by a perforated wall on a polluted gas chamber and a cleaned gas chamber, in which wall is set at least two rows of filter bags and at least two bags each, arranged horizontally according to perforated wall perforation, bag filter regeneration system, compressed air tank, polluted gas inlet duct and cleaned gas outlet duct, **characterized in that** the filter bag (7) regeneration unit made as a "lift" system, situated on each column of filter bags (7), in this the "lift" unit is composed of contactless sensors (9), sliding valves (10) with sensors (11) and openings (12) for the compressed air duct, which moves on the vertical guides (13), compressed air ducts (14), connected one by one to each valve (10) on one end and on other end to the compressed air tank (8) by the mean of electro-valve (15).
